(19) **Europäisches Patentamt**
**European Patent Office**
**Office européen des brevets**

(11) **EP 4 550 062 A1**

(12) **EUROPEAN PATENT APPLICATION**

(43) Date of publication:
07.05.2025 Bulletin 2025/19

(21) Application number: 23207740.4

(22) Date of filing: 03.11.2023

(51) International Patent Classification (IPC):
*G05B 13/02* (2006.01)    *G05B 17/02* (2006.01)
*G05B 19/418* (2006.01)    *B25J 9/16* (2006.01)

(52) Cooperative Patent Classification (CPC):
**G05B 13/0265; G05B 17/02; G05B 19/41885;**
B25J 9/1674

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
- **Zimmer, Christoph**
**70563 Stuttgart (DE)**
- **Li, Cen-You**
**70565 Stuttgart (DE)**
- **Rakitsch, Barbara**
**70193 Stuttgart (DE)**

Remarks:
Amended claims in accordance with Rule 137(2) EPC.

(54) **METHOD AND SYSTEM FOR TRAINING A TARGET MACHINE LEARNING MODEL FOR A TARGET SYSTEM**

(57)    Some embodiments are directed to a method for training a target machine learning model for a target system in engineered processes and machines. A multitask Gaussian process implements a joint model of safety values of the target and auxiliary system. A new state is selected for the target system, wherein target safety values are predicted by the multitask Gaussian process.

Fig. 1a

Fig. 1b

EP 4 550 062 A1

**Description**

Technical Field

The presently disclosed subject matter relates to a method for training a target machine learning model for a target system in engineered processes and machines, a system, a computer readable medium.

Background

Despite the significant success of machine learning, data access remains a complex task. One notable approach involves experimental design. Specifically, active learning (AL) and Bayesian optimization (BO) employ a sequential data selection procedure. These methods begin with a limited dataset, iteratively calculate an acquisition function, select new data based on the acquisition score, obtain observations from the oracle, and update their beliefs. This process continues until either the learning objective is met, or the acquisition budget is depleted. Often, these learning algorithms use Gaussian processes as surrogate models for computing the acquisition function.

Safety in exploration is important in various fields. For example, in medical simulation devices, especially implanted devices, like spinal cord stimulation, safety is a concern. This was studied by Harkema et al. in "Effect of epidural stimulation of the lumbosacral spinal cord on voluntary movement, standing, and assisted stepping after motor complete paraplegia: a case study.", included herein by reference.

Also in robotics, safety is important. Works such as "Safe controller optimization for quadrotors with Gaussian processes" by Berkenkamp et al. and "GoSafe: Globally Optimal Safe Robot Learning" by Baumann et al. address this issue, both included herein by reference.

One approach for performing safe learning involves modeling safety constraints using an additional Gaussian Process (GP). The process starts with a set of predetermined safe observations. A safe set is defined to limit exploration to regions that demonstrate a high degree of safety confidence. As learning progresses, the safe set expands, thereby increasing the area available for exploration.

Safe learning algorithms are dependent on precise safety models. The approach needs a well-calibrated model of the safety values to be available before exploration begins, which is often challenging. Another limitation of safe learning algorithms is their tendency toward local exploration. Gaussian Processes are inherently smooth, and uncertainty increases as one moves beyond the boundaries of the currently identified safe set. Consequently, regions that are actually safe but disconnected from the current safe set are misclassified as unsafe and remain unexplored. This makes the deployment of safe learning algorithms more labor-intensive as domain experts are required to supply safe data from multiple safe regions.

Summary

Sequential learning methods such as active learning and Bayesian optimization select the most informative data to learn about a task. In many medical or engineering applications, the data selection is constrained by a priori unknown safety conditions. Safe learning methods utilize Gaussian processes (GPs) to model the safety probability and perform data selection in areas with high safety confidence. However, accurate safety modeling requires prior knowledge or consumes data. In addition, the safety confidence centers around the given observations which leads to local exploration.

The inventors realized that transferable auxiliary knowledge is often available in safety critical experiments. In an embodiment, safe sequential transfer learning is used to accelerate the learning of safety values.

Some embodiments are directed to a method for training a target machine learning model for a target system in engineered processes and machines. A multitask Gaussian process implements a joint model of safety values of the target and auxiliary system. A new state is selected for the target system, wherein target safety values are predicted by the multitask Gaussian process.

Using safety values obtained from an auxiliary system allows the system to model safety values for the target system better. It was empirically demonstrated that this approach learns a task with lower data consumption, globally explores multiple disjoint safe regions under guidance of the auxiliary knowledge.

In an embodiment, only the part of the joint model related to the target system is updated when new data becomes available for it. Pre-computation of auxiliary components reduces the additional computational load that is introduced by incorporating auxiliary data.

The training methods described herein may be applied in a wide range of practical applications. Some of such practical applications include engines, and vehicles or robotic devices configured for at least partial autonomous movement. Many other applications are described herein.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded, and when the computer program is available for downloading.

Brief Description Of Drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of conventional safe sequential learning,
Figure 1b schematically shows an example of an embodiment of transfer safe sequential learning,
Figure 2a schematically shows an example of an embodiment of a system for training a target machine learning model for a target system,
Figure 2b schematically shows an example of an embodiment of a system for training a target machine learning model for a target system,
Figure 3a schematically shows an example of an embodiment of a system for training a target machine learning model for a target system,
Figure 3b schematically shows an example of an embodiment of training data for a multitask Gaussian process implementing a joint model of safety values of the target and auxiliary system,
Figure 3c schematically shows an example of an embodiment of a system for training a target machine learning model for a target system,
Figure 3d schematically shows an example of an embodiment of training data for a target machine learning model
Figure 3e schematically shows an example of an embodiment of target machine learning model
Figure 3f schematically shows an example of an embodiment of training data for a multitask Gaussian process implementing a joint model of physical quantities of the target and auxiliary system,
Figures 4a-4f show training result for approximating a function $f$ having input dimension $D = 1$
Figures 5a-5f show training result for approximating a function $f$ having input dimension $D = 2$
Figure 6 schematically shows an example of an embodiment of a method for training a target machine learning model for a target system,
Figure 7a schematically shows a computer readable medium having a writable part comprising a computer program according to an embodiment,
Figure 7b schematically shows a representation of a processor system according to an embodiment.

Reference Signs List

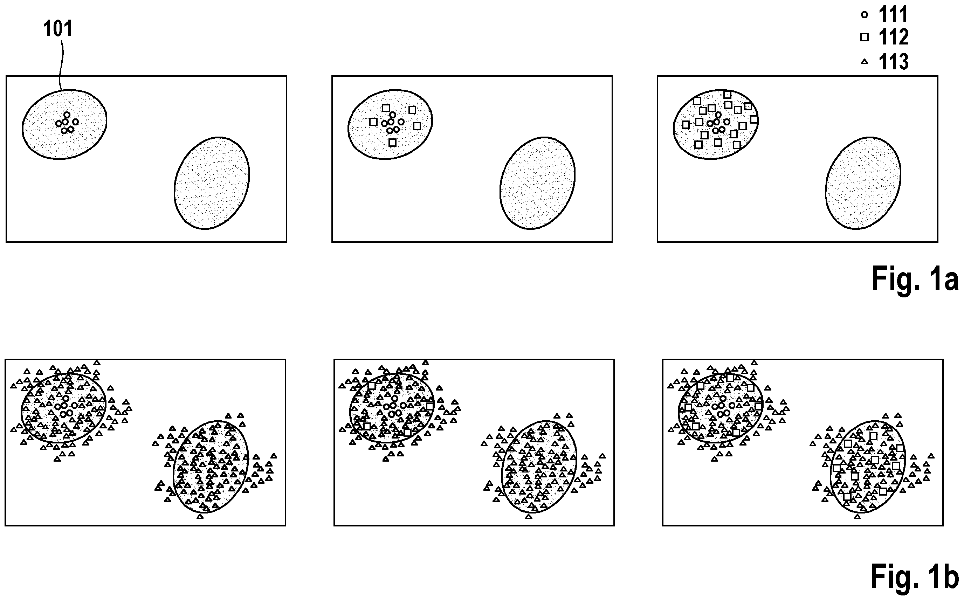

The following list of references and abbreviations corresponds to figures 1a-3f, 7a, 7b, and is provided for facilitating the interpretation of the drawings and shall not be construed as limiting the claims.

| | |
|---|---|
| 101 | a safe region |
| 111 | initial target states |
| 112 | selected target states |
| 113 | auxiliary states |
| 200,202 | a training system |
| 210 | a target system |
| 220 | a training device |
| 230 | a controller device |
| 211 | a processor system |
| 212 | storage |
| 213 | a communication interface |

| 221 | a processor system |
|---|---|
| 222 | a storage |
| 223 | a communication interface |
| 231 | a processor system |
| 232 | a storage |
| 233 | a communication interface |
| 224 | a database |
| 272 | a computer network |

| 100 | a system for training a target machine learning model for a target system |
|---|---|
| 310 | an auxiliary system |
| 311 | an auxiliary safety value sensor |
| 312 | an auxiliary safety value |
| 313 | a physical quantity sensor |
| 314 | a physical quantity |
| 321 | a state |
| 330 | target system |
| 331 | a target safety value sensor |
| 332 | a target safety value |
| 333 | a physical quantity sensor |
| 334 | a physical quantity |
| 341 | a state of the target model |
| 342 | a selected state of the target model |
| 350 | training safety values data |
| 351 | auxiliary safety values training data |
| 352 | target safety values training data |
| 361 | joint model |
| 362 | state selection unit |
| 370 | training data for a target machine learning model |
| 371 | auxiliary physical quantity training data |
| 372 | target physical quantity training data |
| 373 | training data for a joint model of physical quantities of the target and auxiliary system |
| 381 | a machine learning model |

| 411 | efficient transfer |
|---|---|
| 412 | transfer |
| 413 | baseline |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

Description Of Embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of conventional safe sequential learning.

The first image shows a schematic representation of the input domain. In the input domain are two safe regions, one of which has been indicated with reference numeral 101. Shown are a number of initial points, which are known to be safe for the target function. The initial points, or initial target states are indicated schematically as small circles 111.

To learn the target function on the input domain the system may sequentially try new measurements, these are indicated in the second schematic image. The selected target states that are selected for a new measurement are indicated with a small square 112.

Eventually, a good representation of the target function is learned but only in the safe region 101. The other safe region is never discovered.

**Figure 1b** schematically shows an example of an embodiment of transfer safe sequential learning according to an embodiment.

As for figure 1a, the first image shows a schematic representation of the same input domain. In the input domain are two safe regions. Like for figure 1a, multiple initial points are shown, which are known to be safe for the target function. The initial points, or initial target states are indicated schematically as small circles 111.

Different from figure 1a, is that a plurality of auxiliary points are shown for which safety values are known in an auxiliary system. The auxiliary states are indicated as small triangles 113. In this example, these points were drawn from safe regions for the auxiliary system only; but in an embodiment they may include both points from safe and unsafe regions for the auxiliary system. It is typically not the case that a safe point for the auxiliary system is also a safe point for the target system. Indeed, as shown, some of the known auxiliary points fall outside of the safe regions. However, it is the case that safety values for the auxiliary system and the target system are to some extent related, e.g., correlated, so that knowledge of the auxiliary safety values for a plurality of points is informative for safety values of the target system. Knowledge of the safe regions for the auxiliary system allows for transfer learning of the safety regions.

The second illustration of Figure 1b shows that to learn the target function on the input domain the system may sequentially try new measurements, these are indicated in the second schematic image. The selected target states that are selected for a new measurement are indicated with a small square 112.

The explorations learn new values of the target function but also safety values for the points. Knowledge of the safety values for the auxiliary system allows significantly faster learning of the safety values for the target system. This results in a more aggressive exploration, shown in the second illustration by a faster spreading of the explored points, but in particular the ability to jump a gap between two safety regions. Finally, in the third illustration both safe regions are explored, even though they are disjoint.

Eventually, a good representation of the target function is learned in both safe regions.

As safe learning is always initialized with some prior knowledge, it is reasonable to assume correlated experiments have been performed and the results are available as part of the prior knowledge. The assumption of auxiliary data being available is usually satisfied in real experiments. Concrete applications are ubiquitous, including simulation to reality, serial production, and multi-fidelity modeling.

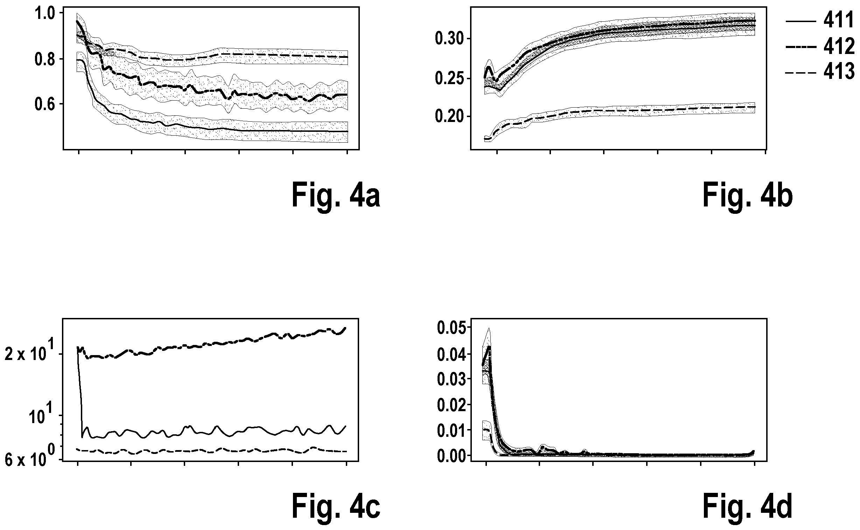

The benefit is twofold: 1) exploration as well as expansion of safe regions are significantly accelerated, and 2) the auxiliary task may provide guidance on safe regions disconnected from the initial target data and thus helps us to explore globally. Additionally, we observe the queries are safer than conventional approaches, especially in early iterations. See tables and the false positive figures of experiments described with reference to figures 4a-5f.

From a modeling perspective, transfer learning can be achieved by considering the auxiliary and target tasks jointly with multi-output GP models.

Conventional computing of a GPs has a cubic time complexity due to the inversion of Gram matrices. Introducing, potentially large amount of auxiliary data will thus introduce a pronounced computational burden, and computational time is often a bottleneck in real experiments. In an embodiment, the multi-output GPs are modularized such that the auxiliary relevant components can be pre-computed and fixed. This alleviates the complexity of multi-output GPs while the benefit is retained. This is not a problem since the goal is to learn only about our target task.

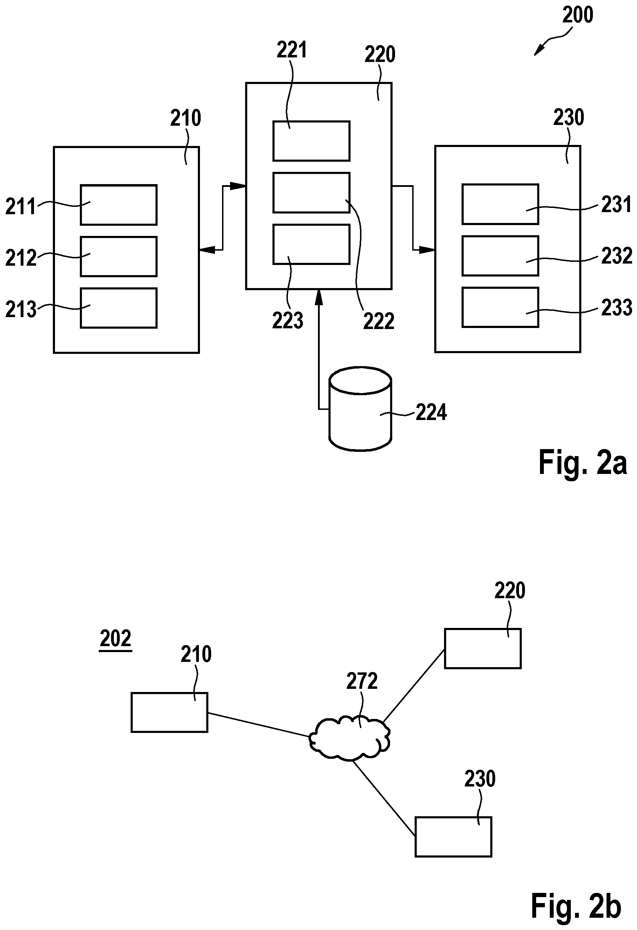

**Figure 2a** schematically shows an example of an embodiment of a system 200 for training a target machine learning model for a target system.

Shown is a target system 210, a training device 220, and controller device 230, which may be part of a system 200.

Target system 210 is in engineered processes and machines. For example, target system 210 may be an engine, a vehicle, a robotic device, in particular a vehicle or a robotic device configured for at least partial autonomous movement. The target system 210 allows configuration into one of multiple possible states. The state may comprise one or more input parameters that control the target system. The state may comprise one or more sensor values that define the state of the target system at least in part.

In operation, the target system allows measurement of at least one target safety value of the target system, and a physical quantity. Operation of the target system is defined as safe if the at least one target safety values lie in a safe region. The safe region may be set by an expert user, and/or may be determined empirically. The physical quantity is useful for

**EP 4 550 062 A1**

monitoring or controlling the target system. There may be an overlap between the safety values and the physical quantity, and they may even be identical.

For example, in an embodiment target system 210 comprises an engine. A state of target system 210 may include various parameters, e.g., one or more of the list: Throttle Position, Fuel Injection Rate, Ignition Timing, Air Intake Temperature, Gear Ratio, Engine Load, Engine Temperature, Exhaust Backpressure, Variable Valve Timing, Oxygen Sensor Feedback, Air-Fuel Ratio, Exhaust Gas Recirculation (EGR), Idle Speed, Oil pressure. Some of these may be controlled either by a user, e.g., throttle position, or by a controller, e.g., fuel injection rate, some of these may be measured but cannot be changed directly.

For example, a safety value for an engine may be the engine temperature, e.g., preferably below a maximum temperature, say, 110 degrees C, oil pressure, e.g., above a minimum value.

For safety considerations, a distinction can be made between soft and hard safety constraints. An input state that later produces an output violating soft constraints may compromise the system, but the consequences are not severe. Therefore, we can continue measurements with the same machine. However, if a hard constraint is violated, the engine becomes inoperable. The distinction may typically be ignored, but for example, if needed the soft constraints, say, may be designated as the safety constraints for a training embodiment.

The physical quantities that may be measured for system 210 may include some or all of the above list, but may also include emission values, such as Carbon Dioxide ($CO_2$), Carbon Monoxide (CO), Nitrogen Oxides (NOx), Particulate Matter (PM), Volatile Organic Compounds (VOCs), Sulfur Oxides (SOx), Hydrocarbons (HC), Ammonia ($NH_3$), Formaldehyde (HCHO), Phenols and Aldehydes, Lead and Heavy Metals.

Physical quantities may also include other quantities than emissions, for example, engine roughness. Examples of engine roughness include combustion irregularities, which refer to inconsistencies in the combustion process within the cylinders that lead to uneven power delivery. This can be affected by factors such as fuel quality, air-fuel mixture, and ignition timing. Mechanical friction is another factor, where roughness could refer to the friction experienced by moving components within the engine, such as increased resistance in piston movement or uneven wear and tear on bearings. Vibrations can also be an indicator, where 'roughness' describes excessive vibrations or noise emanating from the engine due to imbalances in rotating parts or misalignment of components. Finally, operational instabilities such as fluctuating RPMs (Revolutions Per Minute) can also be represented by the term roughness and can be quantitatively measured using various metrics like root mean square of acceleration or specialized roughness indices.

Target system 210 is configured to allow measurement of at least one target safety value of the target system, and a physical quantity useful for monitoring or controlling the target system. Furthermore, a state in which system 210 may be configured, may be recorded together with a measured physical quantity and/or safety value.

Training device 220 is configured to train a target machine learning model to predict the physical quantity or quantities from the state in which system 210 was configured. Note that a state may include input parameters, e.g., settings of system 210, e.g., a throttle positions, and/or measured physical parameters which may be outside control of a user, e.g., ambient temperature, but which may nevertheless impact the physical quantity that the model is trained to predict. When selecting a new state, a possible part of the state that cannot be changed, e.g., ambient temperature, may be assumed to be fixed, while selecting the remaining part of the state.

Training device 220 has access to auxiliary training data 224 corresponding to an auxiliary system. The auxiliary training data comprises multiple pairs of an auxiliary state and auxiliary safety values. Training device 220 uses transfer learning to train a multitask Gaussian process as a joint model of safety values of the target and auxiliary system. The multitask Gaussian process takes as input a state, which state may be a state of the auxiliary system or of the target system, and produces a prediction for a target safety value or auxiliary safety value respectively. Because the auxiliary training data typically more known state/safety value pairs for the auxiliary system than are available for the target system and/or they explore a wider area in the domain input than the available pairs for the target are, learning of the joint model is faster and/or explores a larger area of the domain input, e.g., more safe regions, than training a Gaussian process only on state/safety values pairs for the target system only would be. The trained joint model may be used to iteratively select a new state for system 210 to try, and to obtain measurements for, preferably, both a physical quantity and a safety value. Note that the system does not require that for each state both are always measured, though that would be preferable.

Once the target machine learning model is trained it may be uploaded to a controller 230. For example, controller 230 may be used together with system 210 to control it. For example, if the target machine learning model predicts that a physical quantity will be outside a desirable range, e.g., exceed a value, or be too low, then input parameters may be modified, e.g., gas supply, and the like, e.g., the state may be modified, so that the predicted physical quantity becomes closer to the desired range. An embodiment may comprise both controller 230 and system 210 or may only comprise controller 230.

For example, system 200 may be used to configure a controller 230 to better control a physical quantity of a target system 210. For example, a state of system 210 may be modified so that an emission value, e.g., of an engine, stays or returns below a target.

For example, a state of system 210 may be modified so that an orientation of an autonomous vehicle changes,

6

e.g., makes a turn. The physical quantity and safety quantity may be identical. For example, the model may be trained to predict engine temperature, while being restricted during learning that engine temperature should not exceed a particular value. In use, the model may be used to ensure that predicted engine temperature stays in safe boundaries. Should the predicted temperature exceed a value, the state may be modified, e.g., a speed of a vehicle may be reduced, e.g., a gas supply may be reduced. The action may also include emergency actions, e.g., emergency breaking or the like. This may be to preserve the integrity of the engine but may also be a reaction to traffic conditions.

Target system 210 may comprise a processor system 211, a storage 212, and a communication interface 213. Training device 220 may comprise a processor system 221, a storage 222, and a communication interface 223. Controller device 230 may comprise a processor system 231, a storage 232, and a communication interface 233.

In the various embodiments of communication interfaces 213, 223 and/or 233, the communication interfaces may be selected from various alternatives. For example, the interface may be a network interface to a local or wide area network, e.g., the Internet, a storage interface to an internal or external data storage, an application interface (API), etc.

Storage 212, 222 and 232 may be, e.g., electronic storage, magnetic storage, etc. The storage may comprise local storage, e.g., a local hard drive or electronic memory. Storage 212, 222 and 232 may comprise non-local storage, e.g., cloud storage. In the latter case, storage 212, 222 and 232 may comprise a storage interface to the non-local storage. Storage may comprise multiple discrete sub-storages together making up storage 212, 222, 232.

Storage 212, 222 and 232 may be non-transitory storage. For example, storage 212, 222 and 232 may store data in the presence of power such as a volatile memory device, e.g., a Random Access Memory (RAM). For example, storage 212, 222 and 232 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

Training device 220 may have access to a collection of auxiliary data 224, which may include auxiliary state and safety values, this may be in the form of a database or other ordered data storage.

The devices 210, 220 and 230 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 210, 220 and 230 may comprise a connection interface which is arranged to communicate within system 200 or outside of system 200 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 213 may be used to send or receive digital data, e.g., state, including a measured part of the state, instructions to modify the states, measured physical quantity and/or safety value. Communication interface 223 may be used to send or receive this digital data. The communication interface 223 may be used to configure controller 230. The communication interface 233 may be used to send or receive digital data, e.g., receive a model from device 220. The communication interface 233 may be used to control system 210.

Target system 210, training device 220, and controller device 230 may have a user interface, which may include well-known elements such as one or more buttons, a keyboard, display, touch screen, etc.

The execution of devices 210, 220 and 230 may be implemented in a processor system. The devices 210, 220 and 230 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 210, 220 and 230 may comprise multiple processors. A processor circuit may be implemented in a distributed fashion, e.g., as multiple sub-processor circuits. For example, devices 210, 220 and 230 may use cloud computing.

Typically, the target system 210, training device 220, and controller device 230 each comprise a microprocessor which executes appropriate software stored at the device; for example, that software may have been downloaded and/or stored in a corresponding memory, e.g., a volatile memory such as RAM or a non-volatile memory such as Flash.

Instead of using software to implement a function, devices 210, 220 and/or 230 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, target system 210, training device 220 and controller device 230 may comprise circuits, e.g., for cryptographic processing, and/or arithmetic processing.

In hybrid embodiments, functional units are implemented partially in hardware, e.g., as coprocessors, e.g., GPU coprocessors, and partially in software stored and executed on the device.

**Figure 2b** schematically shows an example of an embodiment of a system 202. System 202 may comprise one or more of: a target systems 210, a training device 220, and a controller 230. The systems and devices are connected through a computer network 272, e.g., the Internet. The target system 210 and training device 220 may be according to an embodiment.

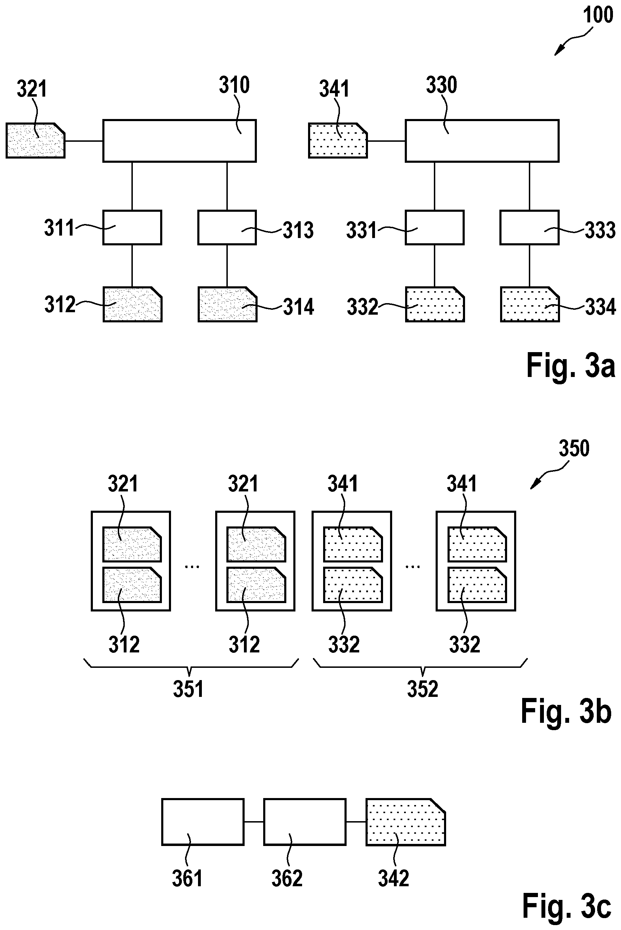

**Figure 3a** schematically shows an example of an embodiment of a system 100 for training a target machine learning model for a target system 330.

Shown in figure 3a is a target system 330. Target system 330 is configurable in one of multiple possible states. Schematically shown, target system 330 is configured into state 341. Target system 330 may be provided with sensors to measure various aspects of the system. In particular, target system 330 may be provided with a physical quantity sensor 333 to measure a physical quantity 334. The physical quantity is useful for monitoring or controlling target system 330.

Target system 330 may also be provided with a target safety value sensor 331 to measure a target safety value 332. If the safety value lies in a safe region, e.g., as predetermined experimentally or by an expert user or the like, target system 330 is defined to be safe. There is a strong desire not to operate target system 330 with a state 341 that would cause it to be unsafe, that is, that would cause its safety value to take on a value outside the safe region.

Typically, there are more than one safety value, whose values together define the safe state. The safe region may comprise multiple subregions that are not connected in the state space.

In an embodiment, the safety values include one or more metrics selected from the group of: Temperature, Pressure, Vibration Level, Noise Level, Humidity, Current or Voltage Level, Flow Rate, Force, Torque, Speed, RPM, Chemical Concentration, and Charge State.

In an embodiment, the physical quantity may comprise one or more of said safety values. The physical quantity may also refer to the environment of the target system, e.g., the position of an obstacle in proximity to the target machine.

Shown in figure 3a is an auxiliary system 310. Auxiliary system 310 is also configurable in one of multiple possible states. The possible states of system 310 may be the same as for target system 330, but this is not necessary. Schematically shown, auxiliary system 310 is configured into a state 321. Auxiliary system 310 may also be provided with sensors to measure various aspects of the system. Auxiliary system 310 may also be provided with an auxiliary safety value sensor 311 to measure an auxiliary safety value 312.

Auxiliary system 310 may have one or more auxiliary safety values. The number of safety values is typically the same for the systems 310 and 330, but this is not necessary.

The auxiliary safety values may define system 310 to be safe, but it is usually not necessary to consider the safe states of system 310, only the safety values itself. However, if new measurements are still taken for the auxiliary system, then consideration of the safe regions of the auxiliary system may be desired, to avoid causing an unsafe state in the auxiliary system.

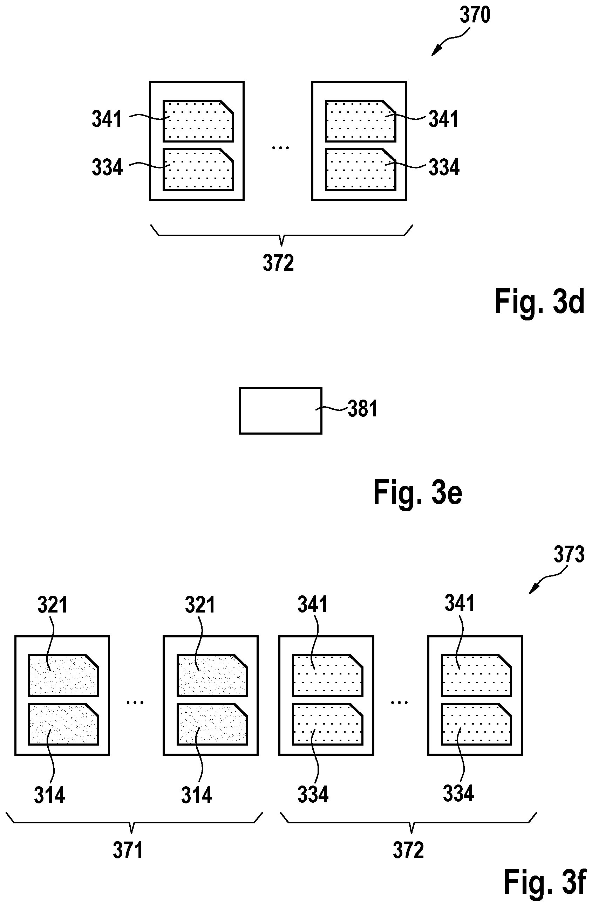

Preferably, auxiliary system 310 is also provided with a physical quantity sensor 313 to measure a physical quantity 314. This is not necessary but may speed of training of a machine learning model for the physical states of target system 330 by transfer learning, as further discussed with reference to figure 3f.

Examples of safety values are discussed herein, but typical examples include temperature, pressure, or the like, indicating an unsafe operating state of the system.

The relationship between the safety values of the auxiliary system and the corresponding auxiliary state is assumed to be informative for the relationship between the safety values of the target system and the corresponding target state. For example, the auxiliary relationship may be analogous to the relationship between the safety values of the target system and the corresponding target state. Features of the auxiliary one can inform the target one.

For example, in an embodiment, the auxiliary system is a computer simulation of the target system. The safety values are in this case not obtained with a real sensor, but with a simulated sensor. This is an advantageous embodiment, since computer simulations are a good way to obtain safety values without risk to a real target system. Although the simulated values may not be entirely accurate, they may still be used to inform training of a join model, as discussed below. A further advantage is that simulated safety values may also be obtained from unsafe regions.

In an embodiment, both the target system and the auxiliary system are engineered processes or machines of the same type, whereby measurements from the auxiliary system are predictive of the target system. For example, the target system and the auxiliary system may be: Engines, such as Internal Combustion Engines, where both systems could represent variations of these engines, for instance, in separate vehicles. The physical quantity may comprise parameters like fuel efficiency or emissions; Wind Turbine Systems, the physical quantity may comprise metrics such as blade stress or rotational speed; Chemical Reactors; CNC Machines. The physical quantity may comprise tool wear or machine accuracy; 3D Printers, wherein the physical quantity may comprise print quality or material utilization. Many other examples of systems and physical parameters are possible.

**Figure 3b** schematically shows an example of an embodiment of training data for a multitask Gaussian process implementing a joint model of safety values of the target and auxiliary system. To transfer the information contained in data captured for the auxiliary system, a joint model 361 (see figure 3c) is trained that applies both to the auxiliary system as well as to the target system. Accordingly, training data 350 is collected that comprises auxiliary training data 351 and target training data 352.

Auxiliary training data 351 comprises multiple pairs of an auxiliary state 321 and auxiliary safety value(s) 312. Typically, the multiple states are different states, typically at least different in part, although some replication of states is acceptable, and the corresponding safety values 312 that the state gave rise to.

Target training data 352 comprises multiple pairs of a target state 341 and target safety value(s) 332. Typically, the multiple states are different states, typically at least different in part, although some replication of states is acceptable, and the corresponding safety values 332 that the state gave rise to.

Typically, auxiliary training data 351 is fixed. For example, it may be a collection of data obtained from another system, e.g., a previous version, a computer simulation, which is now finished, and for which no further will be available, or for which obtaining new data may not even be possible. On the other hand, this is not necessary, if system 310 is ongoing, then new data may continue to become available, including new safety values, and optionally physical quantities, and if so, then these can be added to the auxiliary training data.

On the other hand, target training date 352 is expected to expand. As the joint model 361 is improved, its predictions may be used to safely select new input states, for which in turn new safety value(s) and physical quantities may be measured. For example, as shown in figure 1b, when training starts the number of data points known for the auxiliary system is large, but only a few initial points for the target system are known. As the training progresses though, the target training data will expand.

**Figure 3c** schematically shows an example of an embodiment of a system for training a target machine learning model for a target system. Shown in figure 3c is the joint model 361.

In an embodiment, joint model 361 is trained using transfer learning.

Various types of transfer learning exist. For example, a model may first be trained on the auxiliary training data 351, and then fine-tuned on the target auxiliary training data 352.

However, in an embodiment a different approach is used. In an embodiment, the joint model takes as input a state for either the target or the auxiliary system (or one of them), an indicator to which system the state belongs (which may be a single bit in case of a single auxiliary system), and which will produce a prediction of the one or more safety values for the corresponding system. Thus, the joint model is not retrained for a new but related task but retains the ability to predict safety values for both the target system and the auxiliary system(s).

It was found in experimentation that an advantageous choice for joint model 361 is a multitask Gaussian process that implements a joint model of safety values of the target system and of the auxiliary system. The multitask Gaussian process takes as input a state for either the target or the auxiliary system (or one of them), an indicator to which system the state belongs (which may be a single bit in case of a single auxiliary system), and which will produce a prediction of the one or more safety values for the corresponding system.

To explore the relationship between the state inputs for the target system and the physical quantities and/or safety values, a new state is produced, which may then be executed on target system 330. In the course of which a physical quantity(ies) and/or safety value(s) are obtained; typically, both the physical quantity and the safety value are obtained, but if it happens that only one is obtained then this can be accommodated.

The new physical quantity that is obtained for the new state may be used to further train a target machine learning model 381 (see figure 3e) to predict physical quantities. The new safety value that is obtained for the new state may be used to further train joint model 361 to predict safety values for the target system.

To select a new state 342 for the target system, system 10 may comprise a state selection unit 362. State selection unit generates a new state that on the one hand would be useful to extend the knowledge about the physical quantity of the target system, e.g., to train model 381, and/or that would be useful to extend the knowledge about the safety value of the target system, e.g., to train joint model 361, however under the condition that the new state should not bring target system 330 into an unsafe condition. That is the new state should not cause target system 330 to take on a safety value that lies outside the safety region. For example, state selection unit may select a candidate new state and use the joint model to obtain a prediction of the corresponding safety value for the target system. If the prediction falls outside the safety region, the candidate new state is rejected. Joint model 361 may also produce a probability distribution of the values of the safety values, e.g., typically a Gaussian distribution. The state selection unit 362 may use the probability distribution to compute a probability that the safety value will lie outside the safety region. An acceptable probability of lying outside the safety region may be defined in selection unit 362.

For example, selection unit 362 may be provided with an active learning algorithm. The state selection unit selects a new state to obtain the informative data for training the machine learning model and/or the joint model. Various criteria can be employed for this, such as uncertainty sampling, which focuses the model on areas of highest uncertainty, or query-by-committee, in which multiple versions of the model collectively determine the next most informative state to query. Selection unit 362 may focus solely on training the machine learning model, e.g., learning physical quantities, but in an embodiment, state selection balances the informative value of a new state for both joint model 361 as well as machine learning model 381.

For example, the selection algorithm may balance exploration and exploitation in the data space, e.g., a compromise between exploring new regions of the data space and exploiting known regions to improve predictive accuracy. For example, a sampling distribution may be assigned to a pool of candidate new states. The sampling distribution may express a value containing a value indicating a term for exploration and a term for exploitation. One example is the Active Thompson Sampling (ATS) algorithm. For example, an acquisition function defined for candidate new states, which acquisition function is optimized to select a new state. The acquisition function may evaluate the informativeness or utility of a new state. For example, it may quantify the uncertainty or potential informativeness of a given new state.

Selection unit 362 need not necessarily focus on the whole of the domain input equally. For example, selection unit 362 may be configured for Bayesian optimization, in which a state is sought so that the physical state optimizes some criterion.

In both methods, candidate new states are evaluated on predicted safety values and candidate new states are rejected if the likelihood that they cause an unsafe state in the target system 330 is too high, e.g., exceeding a threshold.

Once selection unit 362 selected a new state 342, the target system 330 may be configured for new state 342, the new physical state and/or safety values may be obtained, and the machine learning model 381 and joint model 361 may be updated.

Interestingly, in an embodiment, the auxiliary data part of training data 350 is constant while the target data part grows. This may be exploited to update joint model 361 more efficiently. A part of joint model 361 may be identified that solely relates to the auxiliary system and/or to the auxiliary data 351. As auxiliary data 351 does not change, the updating of joint model 361 need not update this part related to auxiliary system 310. This is especially efficient if joint model 361 comprises a multitask Gaussian process, since updating such process may have a cubic growth with the number of data points. By reducing the amount of data that needs updating the training process becomes more efficient.

**Figure 3d** schematically shows an example of an embodiment of training data 370 for a target machine learning model 381.

Target training data 370 comprises multiple pairs of a target state 341 and physical quantity(ies) 334. Typically, the multiple states are different states, typically at least different in part, although some replication of states is acceptable, and the corresponding physical quantity 334 that the state gave rise to.

**Figure 3e** schematically shows an example of an embodiment of target machine learning model 381.

Various machine learning models may be employed for target machine learning model 381. Model 381 is configured to receive as input a state of the target system and to produce as output a prediction of the physical quantity.

For example, target machine learning model 381 may comprise a neural network trained to process the state of the target system and produce a prediction of the physical quantity. Alternatively, model 381 could employ a Support Vector Machine (SVM) that may work by finding one or more hyperplanes to separate different predicted outcomes based on the system's state. Another option could be a Random Forest algorithm, which uses an ensemble of decision trees to make predictions. Each tree considers a random subset of features, thereby offering a robust model. Gradient Boosting techniques can also be used, combining weak predictors to form a strong predictor by sequentially correcting errors from previous models. Updating such models may fine tune a previous version of the model, which may comprise retraining the model on the larger data set 370.

A particularly advantageous choice is Gaussian Processes, may also be incorporated to provide predictions as well as a measure of uncertainty.

**Figure 3f** schematically shows an example of an embodiment of training data 373 for a multitask Gaussian process implementing a joint model of physical quantities of the target and auxiliary system.

Training data 373 comprises training data 372 but also auxiliary training data 371. Auxiliary training data 371 comprises multiple pairs of an auxiliary state 321 and a corresponding physical quantity(ies) 314 of the auxiliary system.

Model 381 may comprise a multitask Gaussian process implementing a joint model of physical quantities of the target and auxiliary system. A joint model 381 is configured to predict a physical quantity both for the target system and for the auxiliary system, thus causing transfer learning between the two domains.

Below a number of applications of embodiments of training a target machine learning model a provided.

In an embodiment, model 381 is configured to analyze data from various types of sensors to obtain measurements of the environment. These sensors can produce different forms of data such as digital images, including video, radar, LiDAR, ultrasonic, motion, and thermal images, as well as audio signals. In particular, model 381 may be configured to take sensor signals and derive additional information about elements encoded in those signals. This functionality allows for indirect measurements based on the direct sensor signals. For example, model 381 may be a so-called virtual sensor. Physical quantities that are in theory measurable, but which are undesirable to obtain in a non-prototype system, may be predicted from other aspects of the system's state, e.g., sensor readings. In an embodiment, model 381 is configured to determine continuous values from the sensor data. This could include measurements like distance, velocity, or acceleration. It can also track items within the data.

In an embodiment, model 381 may be integrated in a controller configured to compute a control signal for a variety of technical systems. These could range from computer-controlled machines like domestic appliances and manufacturing machinery, to information conveying systems such as surveillance or medical imaging systems. The control signal may comprise, e.g., a start/stop signal, temperature setting, speed control, emergency stop, etc.

Model 381 may be used to monitor the target system. For example, monitoring may comprise

- obtaining a state of the target system,
- applying the target machine learning model to the obtained state thus obtaining as output a prediction of the physical quantity.

The predicted physical quantity may be reported to a user of the target system. The predicted physical quantity may be compared to a target value and the state may be corrected if the predicted physical quantity deviates from the target value by more than a threshold amount. For example, one may test if the predicted physical quantity falls outside a desired range and start a recovery if not.

Note that the physical quantity and the safety value may be identical, or the physical quantity may be comprised in the safety values. For example, in a dynamical system, e.g., like a robotic system, one could monitor the safety values in real time and shut the target system down when the states start evolving to unsafe outputs, then starting a recovery. Real time monitoring will be effective if the dynamics are slow enough compared to a response time of the system.

Model 381 may be used to control the target system. For example, multiple states may be obtained, the target machine learning model being applied to each of the multiple states thus obtaining as output a prediction of the physical quantity for each of the multiple states, selecting a state from the multiple states in dependence on the predicted physical quantity, and configuring the target system according to the state.

For example, the target system comprises an at least partially autonomous vehicle, the state comprising: one or more of a control state, e.g., a combination of one or more of: throttle, brake, steering angle; a vehicle state, e.g., a combination of one or more of: a position, an orientation, a longitudinal velocity, and a lateral velocity of the vehicle, a gearbox position, an engine RPM; and a road state, e.g., a combination of one or more of: surrounding objects and traffic, and road information, the machine learning output comprising a predicted change in vehicle state.

Below several further optional refinements, details, and embodiments are illustrated in a more mathematical language. These additional examples serve as additional embodiments and refinements but are not intended as limiting the possible scope of embodiments.

Regression outputs and safety values are considered as follows. Each input $x \in X \subseteq \mathbb{R}^D$ has a corresponding regression output $y \in \mathbb{R}$ and the corresponding safety values jointly expressed as a vector $\mathbf{z} = (z^1, \ldots, z^J) \in \mathbb{R}^J$.

For example, $y = f(\mathbf{x}) + \varepsilon_f$, $z^j = q_j(\mathbf{x}) + \varepsilon_{qj}$, where $\epsilon_f \sim \mathcal{N}(0, \sigma_f^2), \epsilon_{q_j} \sim \mathcal{N}(0, \sigma_{q_j}^2)$. In addition, $y_s = f_s(\mathbf{x}_s) + \epsilon_{f_s}, z_s^j = q_{j,s}(\mathbf{x}_s) + \epsilon_{q_{j,s}}$, where $\epsilon_{f_s} \sim \mathcal{N}(0, \sigma_{f_s}^2), \epsilon_{q_{j,s}} \sim \mathcal{N}(0, \sigma_{q_{j,s}}^2)$. $\{f, q_j\}$ may be the target black-box function and safety functions. The auxiliary and target tasks may have a different number of safety conditions, but one may add trivial constraints (e.g., $1 \geq -\infty$) to either task in order to have the same $J$ for both tasks.

We are given a, typically small, number of safe observations $\mathcal{D}_N = \{\mathbf{X}^N, \mathbf{Y}^N, \mathbf{Z}^N\}, \mathbf{X}^N = \{\mathbf{x}_1, \ldots, \mathbf{x}_N\} \subseteq \mathcal{X}, \mathbf{Y}^N = \{y_1, \ldots, y_N\} \subseteq \mathbb{R}$ and $\mathbf{Z}^N = \{\mathbf{z}_n | z_n^j \geq T_j, \forall j = 1, \ldots, J\}_{n=1}^N$. $\forall j = 1, \ldots, J$, $T_j$ are safety thresholds. We are further given auxiliary data $\mathcal{D}_s = \{\mathbf{X}_s^{M_s}, \mathbf{Y}_s^{M_s}, \mathbf{Z}_s^{M_s}\}, \mathbf{X}_s^{M_s} = \{\mathbf{x}_{s,1}, \ldots, \mathbf{x}_{s,M_s}\} \subseteq \mathcal{X}, \mathbf{Y}_s^{M_s} = \{y_{s,1}, \ldots, y_{s,M_s}\} \subseteq \mathbb{R}$ and $\mathbf{Z}_s^{M_s} = \{(z_{s,n}^1, \ldots, z_{s,n}^J) | n = 1, \ldots, M_s\} \subseteq \mathbb{R}^J$. One may typically assume $M_s$, the number of auxiliary data, is large enough so that there is no need to explore for the auxiliary task. This is often the case when there is plenty of data from previous versions of systems or prototypes.

A goal may be to evaluate the function f: $\mathcal{X} \to \mathbb{R}$ where each evaluation is expensive. In each iteration, we select a point $\mathbf{x}_n \in X_{pool} \subseteq X$ to evaluate ($X_{pool} \subseteq X$ is the search pool which can be the entire space $X$ or a predefined subspace of $X$, depending on the applications). This selection should respect the a priori unknown safety constraints $\forall j = 1, \ldots, J, q_j(\mathbf{x}_n) \geq T_j$, where true $q_j$ are inaccessible. For example, a budget consuming labeling process may occur, and we obtain a noisy $y_n$ and noisy safety values $\mathbf{z}_n$. The labeled points may then be added to $\mathcal{D}_N$, with $N$ being increased by 1, and we proceed to the next iterations. While we assume $y_n$ and components of $\mathbf{z}_n$ are labeled synchronously, this is not a requirement, e.g., when we model each variable independently.

This problem formulation applies to both active learning (AL) and Bayesian optimization. Embodiments focus on AL, but embodiments may be changed to BO if needed. A goal is using the evaluations to make accurate predictions $f(X)$, and the points we select would favor general understanding over space $X$, up to the safety constraints.

**Gaussian processes (GPs):**

A GP is a stochastic process specified by a mean and a kernel function. Without loss of generality, we assume the GPs have zero mean. In addition, without prior knowledge of the data, it is common to assume the governing kernels are stationary.

For example, $g \in \{f, q_1, \ldots, q_J\}, g \sim \mathcal{GP}(0, k_g)$ and $k_g(\mathbf{x},\mathbf{x'}) = k_g(\mathbf{x} - \mathbf{x'}) \leq 1$ are typically stationary. Bounding the kernels by 1 provides advantages in theoretical analysis and is not restrictive because the data are usually normalized to zero mean and unit variance.

Denote $\mathbf{B}_f = \mathbf{Y}^N$, and $\mathbf{B}_{q_j} = [\mathbf{Z}^N]_j (z_1^j, \ldots, z_N^j)$, then we have predictive distributions $\forall g \in \{f, g_1, \ldots, g_J\}$,

$$p\big(g(\mathbf{x}_*)|\mathbf{X}^N, \mathbf{B}_g\big) = \mathcal{N}\big(\mu_{g,N}(\mathbf{x}_*), \sigma_{g,N}^2(\mathbf{x}_*)\big),$$

$$\begin{aligned}
\mu_{g,N}(\mathbf{x}_*)\mu_{g,N} &= k_g(\mathbf{X}^N, \mathbf{x}_*)^T\big(\mathbf{K}_g + \sigma_g^2 I\big)^{-1}\mathbf{B}_g, \\
\sigma_{g,N}^2(\mathbf{x}_*)\sigma_{g,N}^2 &= k_g(\mathbf{x}_*, \mathbf{x}_*) - k_g(\mathbf{X}^N, \mathbf{x}_*)^T\big(\mathbf{K}_g + \sigma_g^2 I\big)^{-1}k_g(\mathbf{X}^N, \mathbf{x}_*),
\end{aligned} \tag{1}$$

where $k_g(\mathbf{X}^N, \mathbf{x}_*) = \big(k_g(\mathbf{x}_1, \mathbf{x}_*), \ldots, k_g(\mathbf{x}_N, \mathbf{x}_*)\big) \in \mathbb{R}^{N \times 1}$, and $\mathbf{K}_g \in \mathbb{R}^{N \times N}$ is a matrix with $[\mathbf{K}_g]_{ij} = k_g(\mathbf{x}_i, \mathbf{x}_j)$. Typically, $k_g$ is parameterized and can be fitted together with $\sigma_g^2$.

**Safe learning:**

A core of safe learning methods is to compare the safety confidence bounds with the thresholds and define a safe set

$$\mathcal{S}_N \subseteq \mathcal{X}_{pool}$$

as

$$\mathcal{S}_N = \cap_{j=1}^J \{\mathbf{x} \in \mathcal{X}_{pool} | \mu_{q_j,N}(\mathbf{x}) - \beta_N^{1/2}\sigma_{q_j,N}(\mathbf{x}) \geq T_j\}, \tag{2}$$

where $\beta_N \in \mathbb{R}^+$ is a parameter for probabilistic tolerance control. This definition is equivalent to

$$\forall \mathbf{x} \in \mathcal{S}_N, p\big(q_1(\mathbf{x}) \geq T_1, \ldots, q_J(\mathbf{x}) \geq T_J\big) = (1 - \alpha_N)^J$$

when $\alpha_N = 1 - \Phi(\beta_N^{1/2})$.

In each iteration, a new point is queried by mapping safe candidate inputs to acquisition scores:

$$\mathbf{x}_* = \mathrm{argmax}_{\mathbf{x} \in \mathcal{S}_N} a(\mathbf{x}|\mathcal{D}_N), \tag{3}$$

where $\mathcal{D}_N$ is the current observed dataset and $a$ is an acquisition function. This constrained optimization problem may be solved for a discrete pool with finite elements, e.g., $N_{pool} = |\mathcal{X}_{pool}| < \infty$.

In AL problems, a prominent acquisition function is the predictive entropy: $a(\mathbf{x}|\mathcal{D}_N) = H_f[\mathbf{x}|\mathcal{D}_N] = \frac{1}{2}\log\big(2\pi e\sigma_{f,N}^2(\mathbf{x})\big)$. We use $a(\mathbf{x}|\mathcal{D}_N) = \sum_{g=f,q_1,\ldots,q_J} H_g[\mathbf{x}|\mathcal{D}_N]$ to accelerate the exploration of safety models. Many other choices are available. It is possible to exchange the acquisition function by so-called SafeOpt criteria for safe BO problems.

A possible sequential learning algorithm is as follows:

## Algorithm 1.

1. Input: $\mathcal{D}_N, \mathcal{X}_{pool}, \beta_N$ or $\alpha_N$

2. For $n = 1, \ldots, num\_steps$

   a. Fit GPs $(k_f, k_{q_j}, \sigma_f^2, \sigma_{q_j}^2)$

   b. $\mathbf{x}_* \leftarrow \text{argmax}_{\mathbf{x} \in \mathcal{S}_N} a(\mathbf{x}|\mathcal{D}_N)$

   c. Evaluate at $\mathbf{x}_*$ to get $y_*$ and $\mathbf{z}_*$

   d. $\mathcal{D}_{N+1} \leftarrow \mathcal{D}_N \cup \{\mathbf{x}_*, y_*, \mathbf{z}_*\}$

   e. $\mathcal{X}_{pool} \leftarrow \mathcal{X}_{pool} \backslash \{\mathbf{x}_*\}$

   f. $N \leftarrow N + 1$

3. End for

It can mathematically be proven that standard kernels only allow local exploration of safety regions. Below a transfer learning strategy is presented, to facilitate safe learning and to enable global exploration if properly guided by auxiliary data.

**Modeling the data with auxiliary knowledge:**

We define f: $\mathcal{X} \times \{s, t\} \to \mathbb{R}$ and $\mathbf{q}_j \colon \mathcal{X} \times \{s, t\} \to \mathbb{R}$, where the auxiliary and target functions are concatenated, e.g., $\mathbf{f}(\cdot, s) = f_s(\cdot)$, $\mathbf{f}(\cdot, t) = f(\cdot)$, $\mathbf{q}_j(\cdot, s) = q_{j,s}(\cdot)$ and $\mathbf{q}_j(\cdot, t) = q_j(\cdot)$. One may assume

$$\mathbf{f} \sim \mathcal{GP}(\mathbf{0}, \mathrm{k_f})$$

and

$$\mathbf{q_j} \sim \mathcal{GP}\left(\mathbf{0}, \mathrm{k_{q_j}}\right)$$

for some stationary kernels $\mathrm{k_f}, \mathrm{k_{q_j}} \colon (\mathcal{X} \times \{s, t\}) \times (\mathcal{X} \times \{s, t\}) \to \mathbb{R}$.

Let $\widehat{\mathbf{X}}_s^{M_s} = \{(\mathbf{x}_i, s) | \mathbf{x}_i \in \mathbf{X}_s^{M_s}\}$ and $\widehat{\mathbf{X}}^N = \{(\mathbf{x}_i, t) | \mathbf{x}_i \in \mathbf{X}^N\}$ denote the concatenated input data, $\mathbf{B}_{f_s} = \mathbf{Y}_s^{M_s}$ and $\mathbf{B}_{q_{j,s}} = [\mathbf{Z}_s^{M_s}]_j$ denote the auxiliary observations jointly. Then for $\mathbf{g} \in \{\mathbf{f}, \mathbf{q}_j\}$, the predictive distribution given in equation (1) becomes

$$\mu_{\mathbf{g},N}(\mathbf{x}_*, t) = k_{\mathbf{g}}\left(\begin{pmatrix}\widehat{\mathbf{X}}_s^{M_s} \\ \widehat{\mathbf{X}}^N\end{pmatrix}, (\mathbf{x}_*, t)\right)^T \Omega_{\mathbf{g}}^{-1}\begin{pmatrix}\mathbf{B}_{g_s} \\ \mathbf{B}_g\end{pmatrix},$$

$$\sigma_{\mathbf{g},N}^2(\mathbf{x}_*, t) = k_{\mathbf{g}}((\mathbf{x}_*, t), (\mathbf{x}_*, t)) - k_{\mathbf{g}}\left(\begin{pmatrix}\widehat{\mathbf{X}}_s^{M_s} \\ \widehat{\mathbf{X}}^N\end{pmatrix}, (\mathbf{x}_*, t)\right)^T \Omega_{\mathbf{g}}^{-1} k_{\mathbf{g}}\left(\begin{pmatrix}\widehat{\mathbf{X}}_s^{M_s} \\ \widehat{\mathbf{X}}^N\end{pmatrix}, (\mathbf{x}_*, t)\right),$$

$$\Omega_{\mathbf{g}} = \begin{pmatrix}K_{g_s} + \sigma_{g_s}^2 I_{M_s} & K_{g_s,g} \\ K_{g_s,g}^T & K_g + \sigma_g^2 I_N\end{pmatrix},$$

$$(4)$$

where $K_{g_s} = k_{\mathbf{g}}(\widehat{\mathbf{X}}_s^{M_s}, \widehat{\mathbf{X}}_s^{M_s})$, $K_{g_s,g} = k_{\mathbf{g}}(\widehat{\mathbf{X}}_s^{M_s}, \widehat{\mathbf{X}}^N)$ and $K_g = k_{\mathbf{g}}(\hat{\mathbf{X}}^N, \hat{\mathbf{X}}^N)$. Notice that GP models $\mathbf{f}$ and $\mathbf{q}_j$ are governed by kernels $k_{\mathbf{f}}$, $k_{\mathbf{q_j}}$ and noise parameters $\sigma_{f_s}^2, \sigma_f^2, \sigma_{q_{j,s}}^2, \sigma_{q_j}^2$.

We show empirically in experiments that global exploration is easier to achieve with appropriate $\mathbf{X}_s^{M_s}$.

**In-experiment speed-up via auxiliary pre-computation:**

Computation of $\Omega_{\mathbf{g}}^{-1}$ has cubic complexity

$$\mathcal{O}((M_s + N)^3)$$

in time. This computation is used for fitting the models as well. Common fitting techniques include Type II ML, Type II MAP and Bayesian treatment over kernel and noise parameters, all of which involves computing the marginal likelihood

$$\mathcal{N}\left(\begin{pmatrix}\mathbf{B}_{g_s} \\ \mathbf{B}_g\end{pmatrix} | \mathbf{0}, \Omega_{\mathbf{g}}\right)$$

, $\forall \mathbf{g} \in \{\mathbf{f}, \mathbf{q}_j\}$. Bayesian treatment is not preferred because MC sampling is time-consuming.

A goal now is to avoid calculating $\Omega_{\mathbf{g}}^{-1}$ repeatedly in the experiments. For GP models, the inversion may be achieved by performing a Cholesky decomposition $L(\Omega_g)$, e.g., $\Omega_g = L(\Omega_g)L(\Omega_g)^T$, where $L(\Omega_g)$ is a lower triangular matrix, and then for any matrix C, $L(\Omega_g)^{-1}C$ is computed by solving a linear system.

For each $\mathbf{g} \in \{\mathbf{f}, \mathbf{q}_j\}$, one may cluster the parameters of $k_g$ into $\theta_g = (\theta_{g_s}, \theta_g)$, where $k_{\mathbf{g}}((\cdot, s), (\cdot, s))$ is independent of $\theta_g$. As $\mathbf{X}_s^{M_s}$ is invariant, $K_{g_s}$ adapts only to $\theta_{g_s}$. Given that the auxiliary tasks are well explored, the auxiliary likelihoods $p(\mathbf{B}_{g_s}|\mathbf{X}_s^{M_s}) = \mathcal{N}(\mathbf{B}_{g_s}|\mathbf{0}, K_{g_s} + \sigma_{g_s}^2 I_{M_s})$ can be barely increased while we explore for the target task. We may thus assume $K_{g_s}$ (e.g., $\theta_{g_s}$) and $\sigma_{g_s}^2$ remain fixed in the experiments, and then we prepare a safe learning experiment with pre-computed $L_{g_s} = L(K_{g_s} + \sigma_{g_s}^2 I_{M_s})$.

The learning procedure is summarized in the following algorithm

> Algorithm 2: Modularized SL algorithmInput: $\mathcal{D}_s, \mathcal{D}_N, \mathcal{X}_{pool}, \beta_N$ or $\alpha_N$
>
> 1. Fit GPs
> 2. Fix $\theta_{f_s}, \theta_{q_{j,s}}, \sigma_{f_s}, \sigma_{q_{j,s}}$
> 3. Fix $L_{f_s}, L_{q_{j,s}}$
> 4. For $n = 1, \ldots, num\_steps$
>> a. Fit GPs
>> b. $\mathbf{x}_* \leftarrow \mathrm{argmax}_{\mathbf{x} \in \mathcal{S}_N} a(\mathbf{x}|\mathcal{D}_N)$
>> c. Evaluate at $\mathbf{x}_*$ to get $y_*$ and $\mathbf{z}_*$
>> d. $\mathcal{D}_{N+1} \leftarrow \mathcal{D}_N \cup \{\mathbf{x}_*, y_*, \mathbf{z}_*\}$
>> e. $\mathcal{X}_{pool} \leftarrow \mathcal{X}_{pool} \setminus \{\mathbf{x}_*\}$
>> f. $N \leftarrow N + 1$
> 5. end for

In each iteration (line 4a) the time complexity becomes $\mathcal{O}(M_s^2 N) + \mathcal{O}(M_s N^2) + \mathcal{O}(N^3)$ instead of $\mathcal{O}((M_s + N)^3)$. The technique can be applied to any multi-output kernel because the clustering $\theta_\mathbf{g} = (\theta_{g_s}, \theta_g)$ does not require independence of $k_\mathbf{g}((\cdot, s), (\cdot, t))$ and $k_\mathbf{g}((\cdot, t), (\cdot, t))$ from $\theta_{g_s}$.

**Kernel selection:**

A multi-output kernel $k_\mathbf{g}$ can be generally expressed in a matrix form $k_\mathbf{g}(\cdot, \cdot) = $

$$\begin{pmatrix} k_\mathbf{g}((\cdot, s), (\cdot, s)) & k_\mathbf{g}((\cdot, s), (\cdot, t)) \\ k_\mathbf{g}((\cdot, t), (\cdot, s)) & k_\mathbf{g}((\cdot, t), (\cdot, t)) \end{pmatrix}$$, where the components describe covariances across outputs. We consider one auxiliary task for simplicity, e.g., $k_\mathbf{g}((\cdot, s), (\cdot, s)) \in \mathbb{R}^1$. A specific multi-output framework that may be used is the

$$k_\mathbf{g} = \sum_l \begin{pmatrix} W_{l,s}^2 + \kappa_s & W_{l,s} W_{l,t} \\ W_{l,s} W_{l,t} & W_{l,t}^2 + \kappa \end{pmatrix} \otimes k_l(\cdot, \cdot)$$

linear model of coregionalization (LMC): , where $k_l(\cdot, \cdot)$ is a standard

kernel as used in equation (1), and the correlation term ( $W_l W_l^T + diag(\kappa_s, \kappa)$ ) is positive definite when $\kappa_s, \kappa \in \mathbb{R}^+$.

This model can be used for the modularization computation if $W_{l,s}$, $\kappa_s$, parameters of $k_l(\cdot, \cdot)$ and $\sigma_{g_s}^2$ are fixed (e.g., $\theta_{g_s}$ is a vector of $W_{l,s}$, $\kappa_s$ and parameters of $k_l(\cdot, \cdot)$). However, we are no longer able to tune the lengthscale parameters of $k_l$ while we query for our target task (only $W_{l,t}^2$ and $\kappa$ trainable).

$$k_\mathbf{g} = \begin{pmatrix} k_s(\cdot, \cdot) & k_s(\cdot, \cdot) \\ k_s(\cdot, \cdot) & k_s(\cdot, \cdot) + k_t(\cdot, \cdot) \end{pmatrix}$$

A hierarchical GP (HGP) may be used: . With HGP, the modularized computation is applied by pretraining and fixing $k_s$ (e.g., $\theta_{g_s}$: parameters of $k_s$). The scale and lengthscales of $k_t$ can be tuned in every iteration. HGP is actually a variant of LMC where the target task extrapolates from the auxiliary ($k_s$) with an additive difference pattern ($k_t$). This formulation has the benefit that the fitting of auxiliary ($k_s$) and target ($k_t$) are separated.
In the experiments, we perform the above modular algorithm (algorithm 2) with HGP as our main pipeline. As a baseline comparison, we run the first sequential learning algorithm with conventional single-output GPs. In addition, we compare the main pipeline to a general yet slow framework which utilizes the commonly used LMC with the vanilla sequential learning model fitting strategy (algorithm 1). The base kernels $k_s$, $k_t$, $k_l$ and kernel for single-output GP are all Matérn-5/2 kernel with $D$ lengthscale parameters ( $\mathcal{X} \subseteq \mathbb{R}^D$ ). The scaling variance of $k_l$ is fixed to 1 because it can be absorbed into the output-covariance terms.
However, a pairing of our modularized computation scheme with the general LMC kernel can be useful in closely related settings, e.g., (i) datasets in which more than auxiliary task is available or (ii) sequential learning schemes that only refit the GPs after receiving a batch of query points. This combination was not used in the experiments.

**Experiments**

We compare three experimental setups, algorithm 2 with multi-output HGP, named efficient transfer, algorithm 2 with multi-output LMC, which is a flexible yet slow transfer learning framework and is named transfer, and the conventional algorithm 1 with single-output GPs and Matérn-5/2 kernel, named baseline. For the safety tolerance, we always fix $\beta_N = 4$,

e.g., $\alpha_N = 1 - \Phi(\beta_N^{1/2}) = 0.02275$ (equation 2).

**Figures 4a-4f** show training result for approximating a function $f$ having input dimension $D = 1$

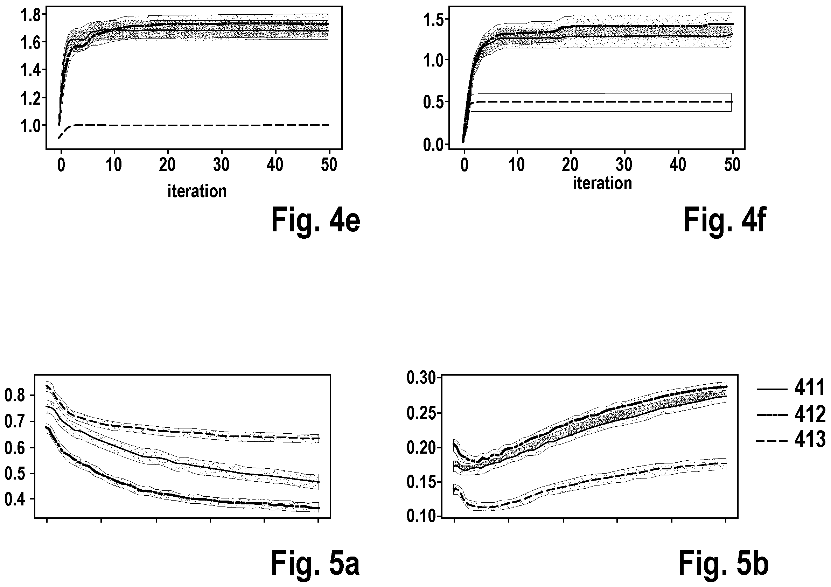

**Figures 5a-5f** show training result for approximating a function $f$ having input dimension $D = 2$

Safe AL experiments on GP data, $\mathcal{X} = [-2, 2]^2$, AL on f constrained by an additional safety function $q \geq 0$. $X_{pool}$ is discretized from $X$ with $N_{pool} = 5000$.
The figures show results for: efficient transfer, transfer, and baseline.
All figures show the number of iterations on the horizontal axis.
Figures 4a and 5a show RMSE on the vertical axis.

Figures 4b and 5b show True positive (TP) area portion on the vertical axis.

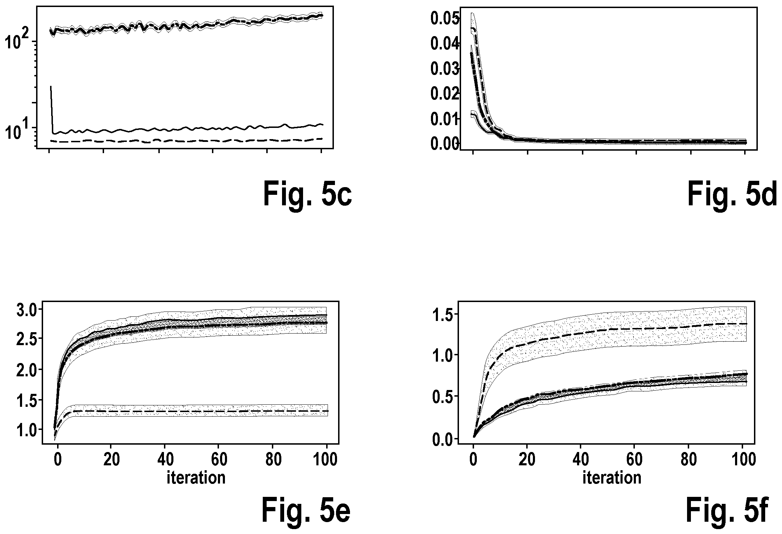

Figures 4c and 5c show fitting time in seconds on the vertical axis.

Figures 4d and 5d show False positive (FP) area portion on the vertical axis.

Figures 4e and 5e show queried regions count on the vertical axis.

Figures 4f and 5f show unsafe queries ration in percentage on the vertical axis.

Compared in the figures 4a-5f is: a baseline 413, which is safe active learning without auxiliary data; a transfer 412 which is an active learning embodiment using auxiliary data, in this case using is LMC without modularization; and efficient transfer 411 which is an active learning embodiment using auxiliary data that leaves model data related to the auxiliary system unchanged during updates, in this case the embodiment uses HGP with fixed and pre-computed auxiliary knowledge. $M_s$ = 250, $N$ is from 20 (0th iteration) to 120 (100th iteration). The results are mean and one standard error of 100 experiments. The safe area is predicted with the surrogate GP model. The test points for RMSEs are sampled from true safe area.

We conduct experiments on simulated data and engine data. All of the simulation data have input dimension D being 1 or 2. Therefore, it is analytically and computationally possible to cluster the disconnected safe regions via connected component labeling algorithms. This means, in each iteration of the experiments, we track to which safe region each observation belongs.

We additionally track the safe area learned by the surrogate models. Since our datasets in the experiments are prepared as executed queries, the safety values of $x \in X_{pool}$ are available for testing purposes. The models infer a safe set

$$\mathcal{S}_N \subseteq \mathcal{X}_{pool}$$

in each iteration with equation (2). By comparing the area of

$$\mathcal{S}_N$$

and the actual safe candidate points, we obtain true positive (TP) points, points in

$$\mathcal{S}_N$$

and actually safe, and false positive (FP) points, points in

$$\mathcal{S}_N$$

but actually unsafe. The TP area and FP area are computed as number of TP/FP points divided by $N_{pool}$ (e.g., TP/FP as portion of $X_{pool}$). In the experiments, we make $N_{pool}$ large enough so the discrete $X_{pool}$ is dense in the space.

The learning result of $f$ is shown as RMSEs between the GP mean prediction and test y sampled from true safe regions. The model fitting time include models **f** and **q**$_j$. For algorithm 2, the first iteration (iter 0-th) measures the time for fitting both the auxiliary components and the target components, and the later iterations fit only the target components.

We generate an auxiliary dataset and a target dataset, each of which has more than one disjoint safe region, and part of the safe area is also safe in the other dataset. Concretely, we generate multi-output GP samples. The first output is treated as our auxiliary task and the second output as the target task. The datasets are generated such that the target task has at least two disjoint safe regions where each region has a common safe area shared with the auxiliary and the shared area is larger than 10% of the overall space.

Figures 4a-4f relate to a dataset wherein $D$ = 1, $f$ is the main function, an additional $q \geq 0$ is the safety constraint.

Figures 5a-5f relate to a dataset wherein $D$ = 2, $f$ is the main function, an additional $q \geq 0$ is the safety constraint.

Additional experiments were performed on datasets in which D=1 or D=2, and $q = f \geq 0$ is the safety constraint.

For each type, we generate 20 datasets and repeat the AL experiments five times for each dataset. For $D$ = 1, we set $M_s$ = 100, $N$ = 10 (initially), and we query for 50 iterations ($N$ = 10 + 50). For $D$ = 2, we set $M_s$ = 250, $N$ = 20 (initially), and we query for 100 iterations ($N$ = 20 + 100). $N_{pool}$ is always set to 5000. Since all the datasets have values center around 0, our constraint $q \geq 0$ indicates that around half of the space is safe.

In figures 4a-5f, transfer learning according to an embodiment achieve much larger and more accurate safe set coverage (larger TP area and smaller FP area). The learning of **f** is more efficient as the RMSE drops faster compared to the baseline method. While the efficient transfer experiments do not outperform transfer experiments, note that efficient transfer utilizes HGP which is a less flexible model than LMC used for transfer, fitting time of efficient transfer is comparable to the baseline where a very large amount of auxiliary data is not presented. In figure 4e and 5e, we count the safe regions that are actually explored with queries (TP area is only from the model predictions). This shows the ability to explore disjoint safe regions that are not indicated by the initial $\mathbf{X}^N$. After the experiments, we measure the ratio of queries that are actually safe among all queries (initial data not included, see table 1). With $\beta_N = 4$ and $J = 1$, the overall safety probability is expected to be 0.97725, assuming that the safety model perfectly represents the true safety probability. We see from the table that our modularized model fitting strategy does not trade off the speed against the safety performance (efficient transfer vs. transfer). For $D = 2$, we suspect that initial $N = 20$ is not enough for GP fitting of the baseline method, as most of the unsafe queries occur in early iterations.

Table 1: Ratio of safe queries ($N = 10 + 50$ for $D = 1$ and $N = 20 + 100$ for $D = 2$)

| Methods | GP 1D | GP 1D + z | GP 2D | GP 2D + z |
|---|---|---|---|---|
| Efficient transfer SAL | $0.9908 \pm 0.0012$ | $0.9871 \pm 0.0013$ | $0.9701 \pm 0.0031$ | $0.9739 \pm 0.0021$ |
| Transfer SAL | $0.9845 \pm 0.0018$ | $0.9857 \pm 0.0013$ | $0.9544 \pm 0.0071$ | $0.9704 \pm 0.0020$ |
| SAL | $0.9920 \pm 0.0010$ | $0.9951 \pm 0.0011$ | $0.9372 \pm 0.0108$ | $0.9469 \pm 0.0080$ |

Note a method according to an embodiment is faster in learning, see figure 4a and 5a, and this does not come at a safety cost as the safety ratios of efficient transfer and transfer are not worse than the baseline.

## Engine modeling

Safe AL experiments were performed on two datasets, measured from the same prototype engine under different conditions. Both datasets measure the temperature, roughness, emission HC, and emission NOx.

Interestingly the safe set of this target task is not clearly separated into multiple disjoint regions. Accordingly, the conventional method eventually identifies most parts of the safe area. Nevertheless, we still see much better RMSEs and much less data consumption for large safe set coverage.

The AL experiments to learn roughness, were constrained by the normalized temperature values $q \leq 1.0$. The safe set is around 0.5293 of the entire space. The datasets have two free variables and two contextual inputs which are fixed. The contextual inputs are recorded with noise, so we interpolate the values with a multi-output GP simulator, trained on the full datasets. This experiment is performed in a semi-simulated condition. We set $M_s = 500$, $N = 20$ (initially), $N_{pool} = 3000$, and we query for 100 iterations ($N = 20 + 100$).

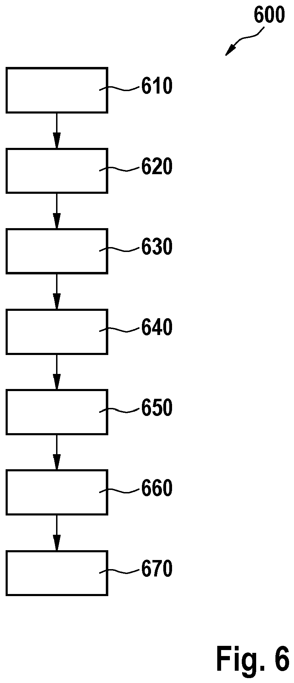

**Figure 6** schematically shows an example of an embodiment of method 600 for training a target machine learning model for a target system. Method 600 is computer-implemented. The target system being configurable into one of multiple possible states,

- in operation the target system allowing measurement of

  - at least one target safety value of the target system, a configuration of the target system being defined as safe by the at least one target safety values lying in a safe region, and
  - a physical quantity useful for monitoring or controlling the target system,

- the target machine learning model being configured to receive as input a state of the target system and to produce as output a prediction of the physical quantity. Method 600 comprises:

  - obtaining (610) auxiliary training data corresponding to an auxiliary system, the auxiliary training data comprising multiple pairs of an auxiliary state and auxiliary safety values,
  - initializing (620) a multitask Gaussian process implementing a joint model of safety values of the target and auxiliary system, the multitask Gaussian process taking as input a state, which state may be a state of the auxiliary system or of the target system, and producing a prediction for a target safety value or auxiliary safety value respectively,

- iteratively training (630) the target machine learning model comprising:

  - selecting (640) a state from the multiple possible states for the target system, wherein target safety values predicted by the multitask Gaussian process for the selected state lie in the safe region,
  - obtaining (650) the physical quantity and at least one target safety value for the selected state in the target system, the physical quantity and safety values being measured through a sensor,
  - updating (660) the multitask Gaussian process with the selected state and corresponding target safety values

- updating (670) the target machine learning model with the selected state and corresponding physical quantity.

For example, the method may be a computer implemented method. For example, obtaining auxiliary training data may use a communications interface, e.g., a network or storage interface, e.g., an API. For example, obtaining the physical quantity and at least one target safety value for the selected state in the target system may comprise instructing the target system, e.g., through a communication interface, to configure according to the new state, and to receive the physical quantity and safety values measurements from a sensor.

For example, a computer processor may execute: initializing a multitask Gaussian process, selecting a state, updating the multitask Gaussian process and the target machine learning model.

Many different ways of executing the method are possible, as will be apparent to a person skilled in the art. For example, the order of the steps can be performed in the shown order, but the order of the steps can be varied, or some steps may be executed in parallel. Moreover, in between steps other method steps may be inserted. The inserted steps may represent refinements of the method such as described herein or may be unrelated to the method. For example, some steps may be executed, at least partially, in parallel. Moreover, a given step may not have finished completely before a next step is started.

Embodiments of the method may be executed using software, which comprises instructions for causing a processor system to perform method 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of auxiliary code, object code, a code intermediate auxiliary, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

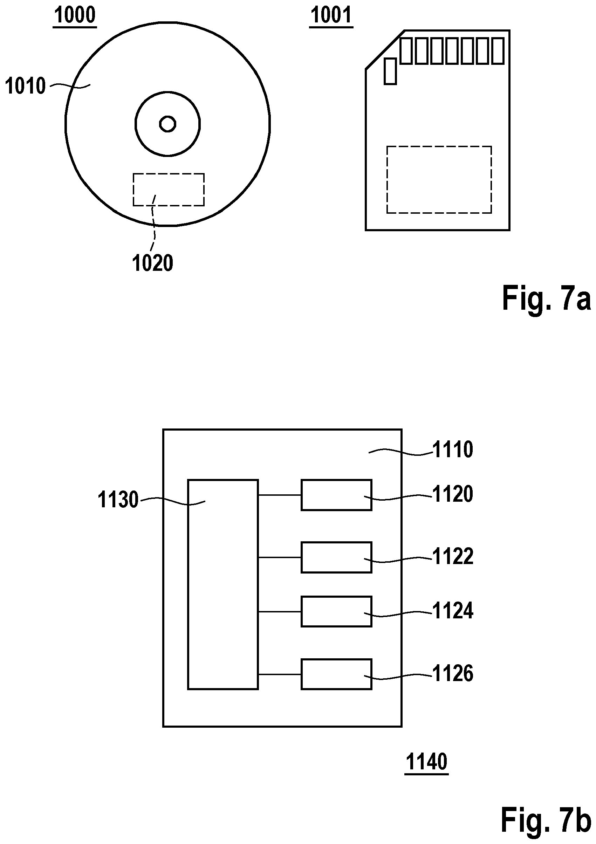

Figure 7a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for training a target machine learning model for a target system according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. Computer program 1020 comprises instructions for causing a processor system to perform said a method for training a target machine learning model for a target system.

Figure 7b shows in a schematic representation of a processor system 1140 according to an embodiment of a system for training a target machine learning model for a target system. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the system for training a target machine learning model for a target system may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

Memory 1122 may be considered to be "non-transitory machine-readable media." As used herein, the term "non-transitory" will be understood to exclude transitory signals but to include all forms of storage, including both volatile and non-volatile memories.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A computer-implemented method (600) for training a target machine learning model for a target system in engineered processes and machines, the target system being configurable into one of multiple possible states,

    - in operation the target system allowing measurement of

        - at least one target safety value of the target system, a configuration of the target system being defined as safe by the at least one target safety values lying in a safe region, and
        - a physical quantity useful for monitoring or controlling the target system,

    - the target machine learning model being configured to receive as input a state of the target system and to produce as output a prediction of the physical quantity, the method for training the target machine learning model comprising:

        - obtaining (610) auxiliary training data corresponding to an auxiliary system, the auxiliary training data comprising multiple pairs of an auxiliary state and auxiliary safety values,
        - initializing (620) a multitask Gaussian process implementing a joint model of safety values of the target and auxiliary system, the multitask Gaussian process taking as input a state, which state may be a state of the auxiliary system or of the target system, and producing a prediction for a target safety value or auxiliary safety value respectively,
        - iteratively training (630) the target machine learning model comprising:

            - selecting (640) a state from the multiple possible states for the target system, wherein target safety values predicted by the multitask Gaussian process for the selected state lie in the safe region,
            - obtaining (650) the physical quantity and at least one target safety value for the selected state in the target system, the physical quantity and safety values being measured through a sensor,
            - updating (660) the multitask Gaussian process with the selected state and corresponding target safety values
            - updating (670) the target machine learning model with the selected state and corresponding physical quantity.

2. A method as in Claim 1, wherein the target system is a vehicle or robotic device configured for at least partial autonomous movement.

3. A method as in any of the preceding claims, wherein the auxiliary system is a computer simulation of the target system.

4. A method as in any of the preceding claims, wherein the target system and auxiliary system each comprise an engineered process or machine of a same type, such that measurements from the auxiliary system are predictive of the target system.

5. A method as in any of the preceding claims, wherein the target machine learning model comprises a multitask Gaussian process, wherein the auxiliary training data comprise auxiliary physical quantities for the auxiliary states in the auxiliary training data, the method comprising: initializing a multitask Gaussian process implementing a joint model of physical quantity of the target and auxiliary system, the multitask Gaussian process taking as input a state, which state may be a state of the auxiliary system or of the target system, and producing a prediction for a target physical quantity or auxiliary physical quantity respectively.

6. A method as in any of the preceding claims, wherein updating the multitask Gaussian process with the selected state and corresponding target safety values leaves a part of the multitask Gaussian process related to the auxiliary system unchanged.

7. A method as in any of the preceding claims, wherein selecting a state of the multiple possible states comprises optimizing an acquisition function.

8. A method as in any of the preceding claims, wherein the at least one safety values comprise one or more of: a Temperature, Pressure, Vibration Level, Noise Level, Humidity, Current or Voltage Level, Flow Rate, Force, Torque, Speed, RPM, Chemical Concentration, Charge State.

9. A method as in any of the preceding claims, wherein the physical quantity comprises

    - any of the quantities mentioned in Claim 8, or
    - a position of an obstacle near the target machine.

10. A computer-implemented method for a target system in engineered processes and machines, using a target machine learning model trained according to any of Claims 1-7, comprising:

    - obtaining a state of the target system,
    - applying the target machine learning model to the obtained state thus obtaining as output a prediction of the physical quantity.

11. A method as in Claim 10, comprising:

    - monitoring the target system, wherein the obtained state is a state in which the target system is configured, and testing if the predicted physical quantity falls outside a desired range, and starting a recovery if not, and/or
    - controlling the target system, wherein multiple states are obtained, the target machine learning model being applied to each of the multiple states thus obtaining as output a prediction of the physical quantity for each of the multiple states, selecting a state from the multiple states in dependence on the predicted physical quantity, and configuring the target system according to the state.

12. A method as in any one of the preceding claims, wherein the target system comprises an at least partially autonomous vehicle, the state comprising: one or more of a control state, e.g., a combination of one or more of: throttle, brake, steering angle; a vehicle state, e.g., a combination of one or more of: a position, an orientation, a longitudinal velocity, and a lateral velocity of the vehicle, a gearbox position, an engine RPM; and a road state, e.g., a combination of one or more of: surrounding objects and traffic, and road information, the machine learning output comprising a predicted change in vehicle state.

13. A system comprising: one or more processors; and one or more storage devices storing instructions that, when executed by the one or more processors, cause the one or more processors to perform operations for a method according to any of Claims 1-12.

14. A transitory or non-transitory computer readable medium (1000) comprising data (1020) representing instructions, which when executed by a processor system, cause the processor system to perform the method according to any of Claims 1-12.

**Amended claims in accordance with Rule 137(2) EPC.**

1. A computer-implemented method (600) for training a target machine learning model for a target system in engineered processes and machines, the target system being configurable into one of multiple possible states,

    - in operation the target system allowing measurement of

        - at least one target safety value of the target system, a configuration of the target system being defined as safe by the at least one target safety values lying in a safe region, and
        - a physical quantity useful for monitoring or controlling the target system,

    - the target machine learning model being configured to receive as input a state of the target system and to produce as output a prediction of the physical quantity, the method for training the target machine learning model comprising:

        - obtaining (610) auxiliary training data corresponding to an auxiliary system, the auxiliary training data comprising multiple pairs of an auxiliary state and auxiliary safety values,
        - initializing (620) a multitask Gaussian process implementing a joint model of safety values of the target and auxiliary system, the multitask Gaussian process taking as input a state, which state may be a state of the auxiliary system or of the target system, and producing a prediction for a target safety value or auxiliary safety value respectively,
        - iteratively training (630) the target machine learning model comprising:

            - selecting (640) a state from the multiple possible states for the target system, wherein target safety values predicted by the multitask Gaussian process for the selected state lie in the safe region,
            - obtaining (650) the physical quantity and at least one target safety value for the selected state in the target system, including configuring the target system according to the selected state, the physical quantity and safety values being measured through a sensor,
            - updating (660) the multitask Gaussian process with the selected state and corresponding target safety values
            - updating (670) the target machine learning model with the selected state and corresponding physical quantity.

2. A method as in Claim 1, wherein the target system is a vehicle or robotic device configured for at least partial autonomous movement.

3. A method as in any of the preceding claims, wherein the auxiliary system is a computer simulation of the target system.

4. A method as in any of Claims 1 and 2, wherein the target system and auxiliary system each comprise an engineered process or machine of a same type, such that measurements from the auxiliary system are predictive of the target system.

5. A method as in any of the preceding claims, wherein the target machine learning model comprises a multitask Gaussian process, wherein the auxiliary training data comprise auxiliary physical quantities for the auxiliary states in the auxiliary training data, the method comprising: initializing a multitask Gaussian process implementing a joint model of physical quantity of the target and auxiliary system, the multitask Gaussian process taking as input a state, which state may be a state of the auxiliary system or of the target system, and producing a prediction for a target physical quantity or auxiliary physical quantity respectively.

6. A method as in any of the preceding claims, wherein the multitask Gaussian process has a part related to the auxiliary system, wherein updating the multitask Gaussian process with the selected state and corresponding target safety values leaves the part of the multitask Gaussian process related to the auxiliary system unchanged.

7. A method as in any of the preceding claims, wherein selecting a state of the multiple possible states comprises optimizing an acquisition function.

8. A method as in any of the preceding claims, wherein the target system allows measurement of at least one target safety value out of: a Temperature, Pressure, Vibration Level, Noise Level, Humidity, Current or Voltage Level, Flow Rate, Force, Torque, Speed, RPM, Chemical Concentration, Charge State.

9. A method as in any of the preceding claims, wherein target system allows measurement of at least one physical quantity out of:

   - any of the quantities mentioned in Claim 8, or
   - a position of an obstacle near the target machine.

10. A computer-implemented method for a target system in engineered processes and machines, using a target machine learning model trained according to any of Claims 1-7, comprising:

    - obtaining a state of the target system,
    - applying the target machine learning model to the obtained state thus obtaining as output a prediction of the physical quantity.

11. A method as in Claim 10, comprising:

    - monitoring the target system, wherein the obtained state is a state in which the target system is configured, and testing if the predicted physical quantity falls outside a desired range, and starting a recovery if not, and/or
    - controlling the target system, wherein multiple states are obtained, the target machine learning model being applied to each of the multiple states thus obtaining as output a prediction of the physical quantity for each of the multiple states, selecting a state from the multiple states in dependence on the predicted physical quantity, and configuring the target system according to the state.

12. A method as in any one of the preceding claims, wherein the target system comprises an at least partially autonomous vehicle, the state comprising: one or more of a control state, e.g., a combination of one or more of: throttle, brake, steering angle; a vehicle state, e.g., a combination of one or more of: a position, an orientation, a longitudinal velocity, and a lateral velocity of the vehicle, a gearbox position, an engine RPM; and a road state, e.g., a combination of one or more of: surrounding objects and traffic, and road information, the machine learning output comprising a predicted change in vehicle state.

13. A system comprising: one or more processors; and one or more storage devices storing instructions that, when executed by the one or more processors, cause the one or more processors to perform operations for a method according to any of Claims 1-12.

14. A transitory or non-transitory computer readable medium (1000) comprising data (1020) representing instructions, which when executed by a processor system, cause the processor system to perform the method according to any of Claims 1-12.

Fig. 1a

Fig. 1b

Fig. 2a

Fig. 2b

Fig. 3a

Fig. 3b

Fig. 3c

**Fig. 3d**

**Fig. 3e**

**Fig. 3f**

**Fig. 4a**

**Fig. 4b**

— 411
--- 412
--- 413

**Fig. 4c**

**Fig. 4d**

**Fig. 4e**

**Fig. 4f**

**Fig. 5a**

**Fig. 5b**

--- 411
---- 412
--- 413

Fig. 5d

Fig. 5c

Fig. 5f

Fig. 5e

Fig. 6

1000

1001

1010

1020

**Fig. 7a**

1130

1110

1120

1122

1124

1126

1140

**Fig. 7b**

Europäisches
Patentamt

European
Patent Office

Office européen
des brevets

# EUROPEAN SEARCH REPORT

**Application Number**

EP 23 20 7740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FELIX BERKENKAMP ET AL: "Bayesian Optimization with Safety Constraints: Safe and Automatic Parameter Tuning in Robotics", ARXIV.ORG, CORNELL UNIVERSITY LIBRARY, 201 OLIN LIBRARY CORNELL UNIVERSITY ITHACA, NY 14853, 14 February 2016 (2016-02-14), XP081352946, * 1- 2 * * 3.1- 3.4 * * 4- 4.2.1; figure 1 * * 5-1- 5.3 * | 1-14 | INV. G05B13/02 G05B17/02 G05B19/418 ADD. B25J9/16 |
| X | BERKENKAMP FELIX ET AL: "Safe controller optimization for quadrotors with Gaussian processes", 2016 IEEE INTERNATIONAL CONFERENCE ON ROBOTICS AND AUTOMATION (ICRA), IEEE, 16 May 2016 (2016-05-16), pages 491-496, XP032908193, DOI: 10.1109/ICRA.2016.7487170 [retrieved on 2016-06-08] * III- V * | 1,6,8, 13,14 | |
| A | YOUNGMIN KIM ET AL: "Safe Learning and Optimization Techniques: Towards a Survey of the State of the Art", ARXIV.ORG, CORNELL UNIVERSITY LIBRARY, 201 OLIN LIBRARY CORNELL UNIVERSITY ITHACA, NY 14853, 23 June 2021 (2021-06-23), XP081978200, DOI: 10.1007/978-3-030-73959-1_12 * the whole document * | 1-14 | |

**TECHNICAL FIELDS SEARCHED (IPC)**

G05B
B25J

The present search report has been drawn up for all claims

| Place of search | Date of completion of the search | Examiner |
|---|---|---|
| The Hague | 10 April 2024 | De Porcellinis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................

& : member of the same patent family, corresponding document

EPO FORM 1503 03.82 (P04C01)

**REFERENCES CITED IN THE DESCRIPTION**

**Non-patent literature cited in the description**

- **HARKEMA et al.** *Effect of epidural stimulation of the lumbosacral spinal cord on voluntary movement, standing, and assisted stepping after motor complete paraplegia: a case study.*

- **BERKENKAMP**. *Safe controller optimization for quadrotors with Gaussian processes*
- **BAUMANN**. *GoSafe: Globally Optimal Safe Robot Learning*